# EUROPEAN PATENT APPLICATION

(11) **EP 2 988 515 A1**
(43) Date of publication of application: **24.02.2016**
(21) Application number: 14785430.1
(22) Date of filing: 10.04.2014
(51) Int. Cl.: H04N 21/235

(54) **SERVER DEVICE, CONTENT PROVISION METHOD, AND COMPUTER PROGRAM**

(30) Priority: 19.04.2013 JP 2013088876
(71) Applicant: Sony Corporation, Tokyo 108-0075 (JP)
(72) Inventor: HIRABAYASHI, Mitsuhiro, Tokyo 108-0075 (JP); IGARASHI, Tatsuya, Tokyo 108-0075 (JP)
(74) Representative: D Young & Co LLP
(86) International application number: PCT/JP2014/060375
(87) International publication number: WO 2014/171385

(57) **Abstract**

[Object] To provide a server device which can designate an alternative measure to be taken when a client is not capable of reproducing content when the content is distributed to the client using the ABS technique.

[Solution] Provided is a server device including: a storage unit configured to store information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and a communication unit configured to transmit the access information to the client device according to a request from the client device which reproduces the content.

## Description

### Technical Field

The present disclosure relates to a server device, a content providing method, and a computer program.

### Background Art

In recent years, there are widely used the hypertext transfer protocol (HTTP) for transferring contents and the MP4 related to content compression encoding. The HTTP enables not only downloading of contents but also streaming thereof on the Internet. The HTTP streaming is also adopted in network media standards such as "DLNA guidelines" (2006) and "Open IPTV Forum" (2009). Moreover, the MP4 (ISO/IEC-14496-12, 14) can be used not only as a storage format but also as a transmission format for downloading and streaming, for example.

Regarding the streaming, the adaptive bit rate streaming (ABS) technique is known, as described in Non-Patent Literature below. The ABS technique is a technique in which a plurality of pieces of encoded data having the same content expressed at different bit rates are stored in a content server so that a client selects any piece of encoded data among the plurality of pieces of encoded data in accordance with a network band and reproduces the encoded data.

In the case of normal streaming, when a network band becomes below a bit rate, the data supply becomes incapable of catching up with the consumption, and the buffering data on the client side is depleted. As a result, the client cannot continue reproduction. By contrast, in the ABS technique, the reproduction data is switched to encoded data of a low bit rate when a band becomes narrow. Thus, it is possible to suppress breaks during reproduction.

### Citation List

### Non-Patent Literature

Non-Patent Literature 1: MPEG-DASH (Dynamic Adaptive Streaming over HTTP) (URL: http://mpeg.chiauglione.org/standards/mpeg-dash/media-presentation-description-and-segment-formats/text-isoiec-23009-12012-dam-1)

### Summary of Invention

### Technical Problem

When a client is not capable of reproducing encoded data even of a minimum bit rate, a method of operation depends on installation of a content reproduction application in the client. Thus, a technology for designating alternative measures to be taken when a client is not capable of reproducing encoded data even of a minimum bit rate has been demanded.

Therefore, the present disclosure provides a novel and improved server device, content providing method, and computer program which can designate an alternative measure to be taken when a client is not capable of reproducing content when the content is distributed to the client using the ABS technique.

### Solution to Problem

According to the present disclosure, there is provided a server device including:
a storage unit configured to store information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
a communication unit configured to transmit the access information to the client device according to a request from the client device which reproduces the content.

According to the present disclosure, there is provided a content providing method including: storing information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and transmitting the access information to the client device according to a request from the client device which reproduces the content.

According to the present disclosure, there is provided a computer program causing a computer to execute: storing information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and transmitting the access information to the client device according to a request from the client device which reproduces the content.

### Advantageous Effects of Invention

According to the present disclosure described above, it is possible to provide a novel and improved server device, content providing method, and computer program which can designate an alternative measure to be taken when a client is not capable of reproducing content distributed to the client using the ABS technique.

### Brief Description of Drawings

[FIG. 1] FIG. 1 is a descriptive diagram illustrating a configuration of a content reproduction system according to an embodiment of the present disclosure.
[FIG. 2] FIG. 2 is a descriptive diagram illustrating a data flow in a content reproduction system according to the present embodiment.
[FIG. 3] FIG. 3 is a descriptive diagram illustrating a concrete example of an MPD.
[FIG. 4] FIG. 4 is a functional block diagram illustrating a configuration of a content server 10 according to the present embodiment.
[FIG. 5] FIG. 5 is a functional block diagram illustrating a configuration of a content reproduction device 20 according to the present embodiment.
[FIG. 6A] FIG. 6A is a descriptive diagram showing an example of an MPD
[FIG. 6B] FIG. 6B is a descriptive diagram showing an example of an MPD
[FIG. 7A] FIG. 7A is a descriptive diagram showing an example of an MPD
[FIG. 7B] FIG. 7B is a descriptive diagram showing an example of an MPD
[FIG. 8A] FIG. 8A is a descriptive diagram showing an example of an MPD
[FIG. 8B] FIG. 8B is a descriptive diagram showing an example of an MPD
[FIG. 8C] FIG. 8C is a descriptive diagram showing an example of an MPD
[FIG. 9A] FIG. 9A is a descriptive diagram showing an example of an MPD
[FIG. 9B] FIG. 9B is a descriptive diagram showing an example of an MPD
[FIG. 9C] FIG. 9C is a descriptive diagram showing an example of an MPD
[FIG. 10] FIG. 10 is a descriptive diagram showing an example of an MPD
[FIG. 11] FIG.11 is a descriptive diagram showing an example of an MPD
[FIG. 12] FIG. 12 is a descriptive diagram showing an example of an MPD

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Moreover, in this specification and the drawings, a plurality of elements that have substantially the same function and structure may be distinguished by providing different alphabets after the same reference signs. For example, a plurality of elements that have substantially the same function and structure or logical significance are distinguished as content reproduction devices 20A, 20B, and 20C, if necessary. However, when it is unnecessary to distinguish each of a plurality of elements that have substantially the same function and structure, only the same reference sign is provided. For example, when it is unnecessary to particularly distinguish the content reproduction devices 20A, 20B, and 20C, the content reproduction devices are simply referred to as content reproduction devices 20.

Moreover, the present disclosure will be described following the item order described below.
<1. Overview of content reproduction system>
<2. Configuration of content server >
<3. Configuration of content reproduction device >
<4. Configuration of MPD>
<5. Conclusion>

### <1. Overview of content reproduction system>

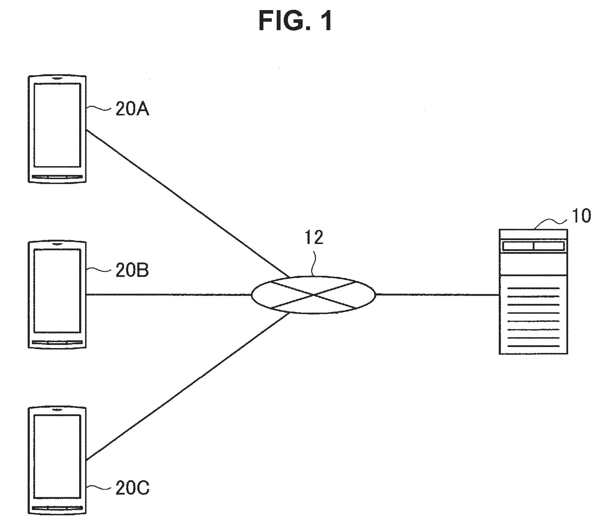

First, a content reproduction system according to an embodiment of the present disclosure will be schematically described with reference to FIG. 1 to FIG. 3.

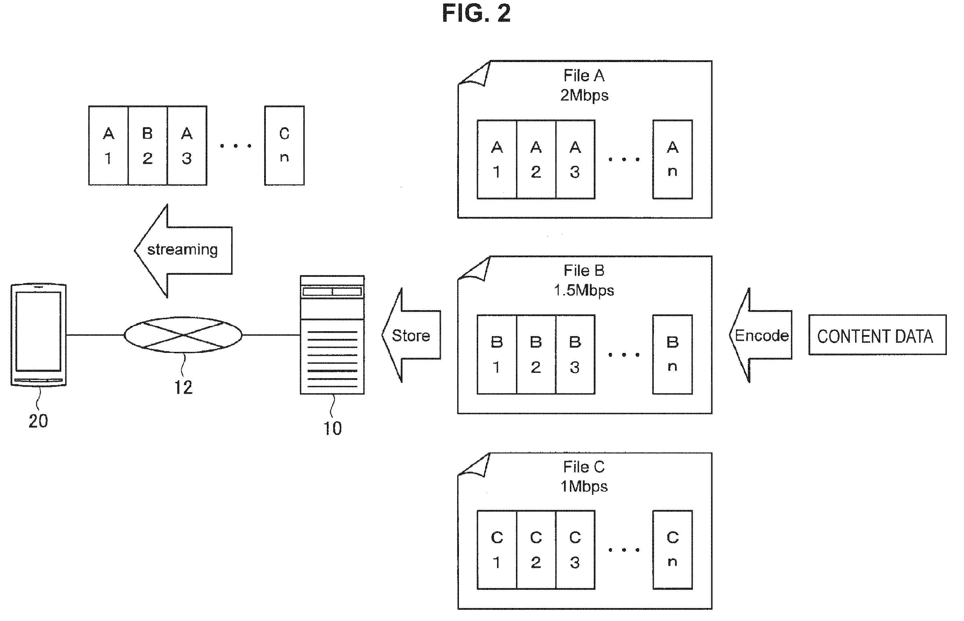

In the following, the basic configuration that is common in each embodiment will be first described with reference to FIG. 1 and FIG. 2.

FIG. 1 is a descriptive diagram illustrating a configuration of a content reproduction system according to an embodiment of the present disclosure. As illustrated in FIG. 1, the content reproduction system according to the embodiment of the present disclosure includes a content server 10, a network 12, and content reproduction devices 20 (client devices).

The content server 10 and the content reproduction devices 20 are connected through the network 12. The network 12 is a wired or wireless transmission path of information transmitted from a device connected to the network 12.

For example, the network 12 may include public networks such as the Internet, a telephone network, and a satellite communication network, various kinds of local area networks (LAN) including Ethernet (registered trademark), and a wide area network (WAN), for example. Moreover, the network 12 may include a dedicated network such as the Internet protocol-virtual private network (IP-VPN).

The content server 10 encodes content data, and generates and stores a data file including encoded data and meta information of the encoded data. Note that, when the content server 10 generates an MP4-format data file, the encoded data corresponds to "mdat", and the meta information corresponds to "moov".

Moreover, the content data may be music data such as music, lectures, and radio programs, image data such as movies, television programs, video programs, pictures, documents, drawings, diagrams, games, and software, for example.

Here, the content server 10 according to the present embodiment generates a plurality of data files of different bit rates regarding the same contents. In the following, this matter will be described concretely with reference to FIG. 2.

FIG. 2 is a descriptive diagram illustrating a data flow in the content reproduction system according to the present embodiment. The content server 10 encodes the same content data at different bit rates, and generates a file A of 2 Mbps, a file B of 1.5 Mbps, and a file C of 1Mbps, for example, as illustrated in FIG. 2. Relatively, the file A is of a high bit rate, the file B is of a standard bit rate, and the file C is of a low bit rate.

Moreover, as illustrated in FIG. 2, the encoded data of each file is divided into a plurality of segments. For example, the encoded data of the file A is divided into segments "A1," "A2," "A3," ......, and "An." The encoded data of the file B is divided into segments "B1," "B2," "B3," ......, and "Bn." The encoded data of the file C is divided into segments "C1," "C2," "C3," ......, and "Cn."

Note that each segment may be constituted by configuration samples of one or two or more pieces of video encoded data and sound encoded data that begin with an MP4 sync sample (IDR-picture in AVC/H.264 video encoding) and can be reproduced independently. For example, when video data of 30 frames per second is encoded in a group of picture (GOP) with a 15-frame fixed length, each segment may be two-second video and sound encoded data corresponding to 4 GOP or 10-second video and sound encoded data corresponding to 20 GOP.

Moreover, a reproduction range (range of a time position from the head of contents) by a segment with the same arrangement order in each file is the same. For example, the reproduction ranges of the segment "A2," the segment "B2," and the segment "C2" are the same, and when each segment is two-second encoded data, the reproduction range of any of the segment "A2," the segment "B2," and the segment "C2" is two seconds to four seconds of contents.

The content server 10 generates the file A to the file C constituted by such a plurality of segments, and stores the file A to the file C. Then, the content server 10 sequentially transmits the segments constituting different files to the content reproduction device 20, as illustrated in FIG. 2, and the content reproduction device 20 streaming-reproduces the received segments.

Here, the content server 10 according to the present embodiment transmits a play list file (hereinafter, referred to as a media presentation description (MPD) including bit rate information and access information of each encoded data to the content reproduction device 20. Based on the MPD, the content reproduction device 20 selects any bit rate among a plurality of bit rates, and requests the content server 10 to transmit a segment corresponding to the selected bit rate.

Although only one content server 10 is illustrated in FIG. 1, it is needless to say that the present disclosure is not limited thereto.

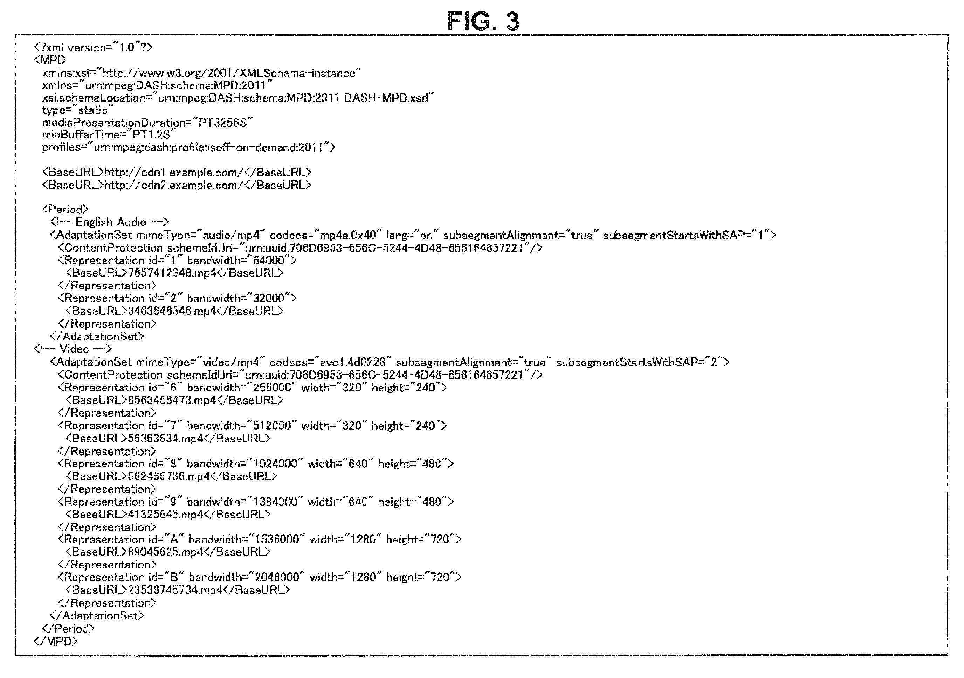

FIG. 3 is a descriptive diagram illustrating a concrete example of the MPD. As illustrated in FIG. 3, the MPD includes access information related to a plurality of encoded data having different bit rates (bandwidth). For example, the MPD illustrated in FIG. 3 indicates the presence of encoded data of 256 Kbps, 1.024 Mbps, 1.384 Mbps, 1.536 Mbps, and 2.048 Mbps, and includes access information related to each encoded data. The content reproduction device 20 can dynamically change a bit rate of encoded data to be streaming-reproduced based on such an MPD.

Note that, although FIG. 1 illustrates a mobile terminal as an example of the content reproduction device 20, the content reproduction device 20 is not limited to such an example. For example, the content reproduction device 20 may be an information processing device such as a personal computer (PC), a home image processor (DVD recorder, video deck, etc.), a personal digital assistant (PDA), a home game machine, and a household electrical appliance. Moreover, the content reproduction device 20 may be an information processing device such as a cellular phone, a personal handyphone system (PHS), a portable music reproduction device, a portable image processor, and a portable game machine.

### <2. Configuration of content server 10>

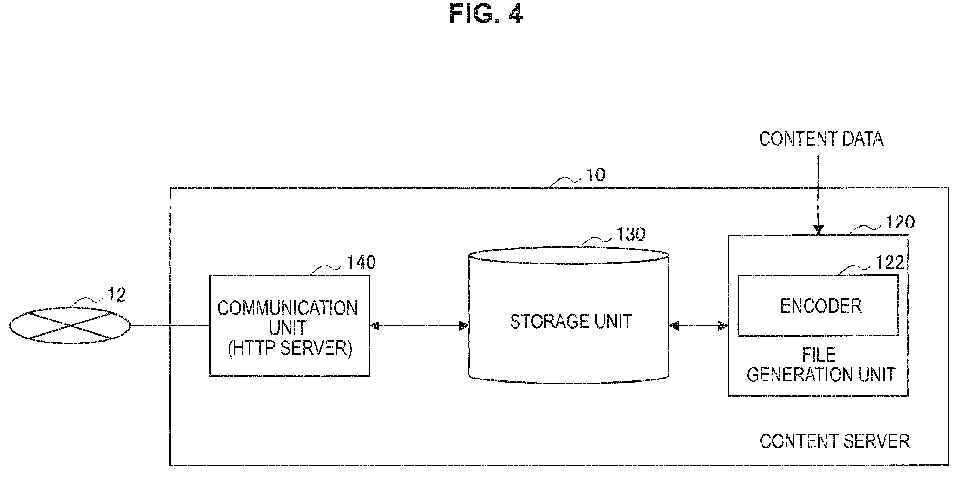

In the above, the overview of the content reproduction system according to the embodiment of the present disclosure has been described with reference to FIG. 1 to FIG. 3. Subsequently, the configuration of the content server 10 according to the present embodiment will be described with reference to FIG. 4.

FIG. 4 is a functional block diagram illustrating a configuration of the content server 10 according to the present embodiment. As illustrated in FIG. 4, the content server 10 according to the present embodiment includes a file generation unit 120, a storage unit 130, and a communication unit 140.

The file generation unit 120 includes an encoder 122 that encodes content data, and generates a plurality of pieces of encoded data having the same contents at difference bit rates and the above-described MPD. For example, when the encoded data of 256 Kbps, 1.024 Mbps, 1.384 Mbps, 1.536 Mbps, and 2.048Mbps are generated, the file generation unit 120 generates the MPD illustrated in FIG. 3.

The storage unit 130 stores a plurality of encoded data of different bit rates and the MPD that are generated by the file generation unit 120. The storage unit 130 may be a storage medium such as a nonvolatile memory, a magnetic disk, an optical disc, and a magneto-optical (MO) disc. The nonvolatile memory is exemplified by an electrically erasable programmable read-only memory (EEPROM) and an erasable programmable read-only memory (EPROM), for example. Moreover, the magnetic disk is exemplified by a hard disk and a disc-shaped magnetic body disk, for example. Moreover, the optical disc is exemplified by a compact disc (CD), a digital versatile disc recordable (DVD-R), and a Blu-ray disc (BD) (registered trademark), for example.

The communication unit 140 is an interface with the content reproduction device 20, and performs communication with the content reproduction device 20 through the network 12. To be more specific, the communication unit 140 has a function as an HTTP server that performs communication with the content reproduction device 20 in accordance with the HTTP. For example, the communication unit 140 transmits an MPD to the content reproduction device 20, extracts, from the storage unit 130, encoded data requested based on the MPD by the content reproduction device 20, in accordance with the HTTP, and transmits the encoded data to the content reproduction device 20 as an HTTP response.

### <3. Configuration of content reproduction device 20>

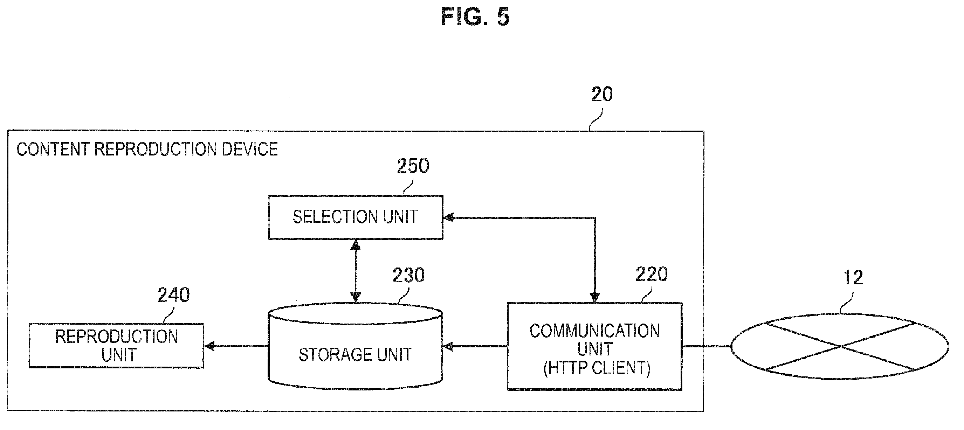

In the above, the configuration of the content server 10 according to the present embodiment has been described. Subsequently, the configuration of the content reproduction device 20 according to the present embodiment will be described with reference to FIG. 5.

FIG. 5 is a functional block diagram illustrating a configuration of the content reproduction device 20 according to the present embodiment. As illustrated in FIG. 5, the content reproduction device 20 according to the present embodiment includes a communication unit 220, a storage unit 230, a reproduction unit 240, and a selection unit 250.

The communication unit 220 (communication unit) is an interface with the content server 10, and requests data from the content server 10 and acquires data from the content server 10. To be more specific, the communication unit 220 has a function as an HTTP client that performs communication with the content reproduction device 20 in accordance with the HTTP. For example, the communication unit 220 uses an HTTP range and thus can selectively acquire an MPD or a segment of encoded data from the content server 10.

The storage unit 230 stores various types of information regarding reproduction of content. For example, the storage unit 230 sequentially buffers segments acquired by the communication unit 220 from the content server 10. The segments of the encoded data buffered by the storage unit 230 are sequentially supplied to the reproduction unit 240 in a first-in first-out (FIFO) manner.

The reproduction unit 240 sequentially reproduces the segments supplied from the storage unit 230. Concretely, the reproduction unit 240 performs decoding, D-A conversion, and rendering of the segments, for example.

The selection unit 250 sequentially selects, in the same contents, segments of encoded data corresponding to certain bit rates included in the MPD that are to be acquired. For example, when the selection unit 250 sequentially selects segments "A1," "B2," and "A3" in accordance with a band of the network 12, the communication unit 220 sequentially acquires the segments "A1," "B2," and "A3" from the content server 10, as illustrated in FIG. 2.

### <4. Configuration of MPD>

Next, an example of an MPD retained by the storage unit 130 of the content server 10 will be introduced. When the content reproduction device 20 is not capable of reproducing content of encoded data even of a minimum bit rate, if no method of operation is prescribed, the operation depends on what is installed in the content reproduction device 20 as described above.

For example, when it is not possible to reproduce encoded data even of a minimum bit rate, if no method of operation is prescribed, the content reproduction device 20 can perform any of various operations of displaying the sequence of JPEG files, only reproducing sound of content, or the like, rather than content that is supposed to be reproduced.

Thus, an example of an MPD retained by the storage unit 130 in which the method in which the content reproduction device 20 operates when the content reproduction device 20 is not capable of reproducing encoded data even of a minimum bit rate is described will be introduced below.

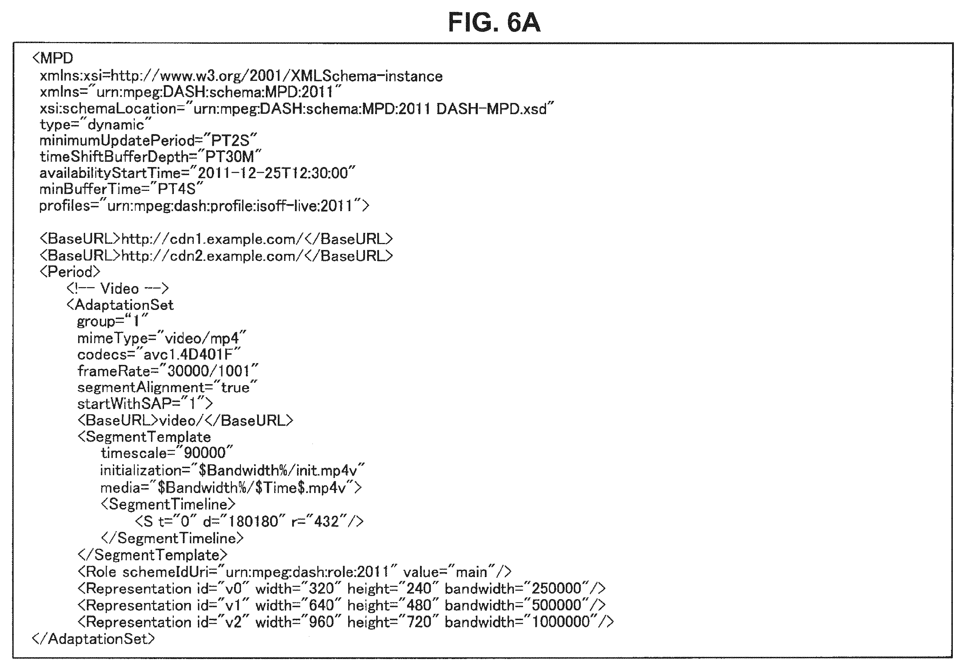

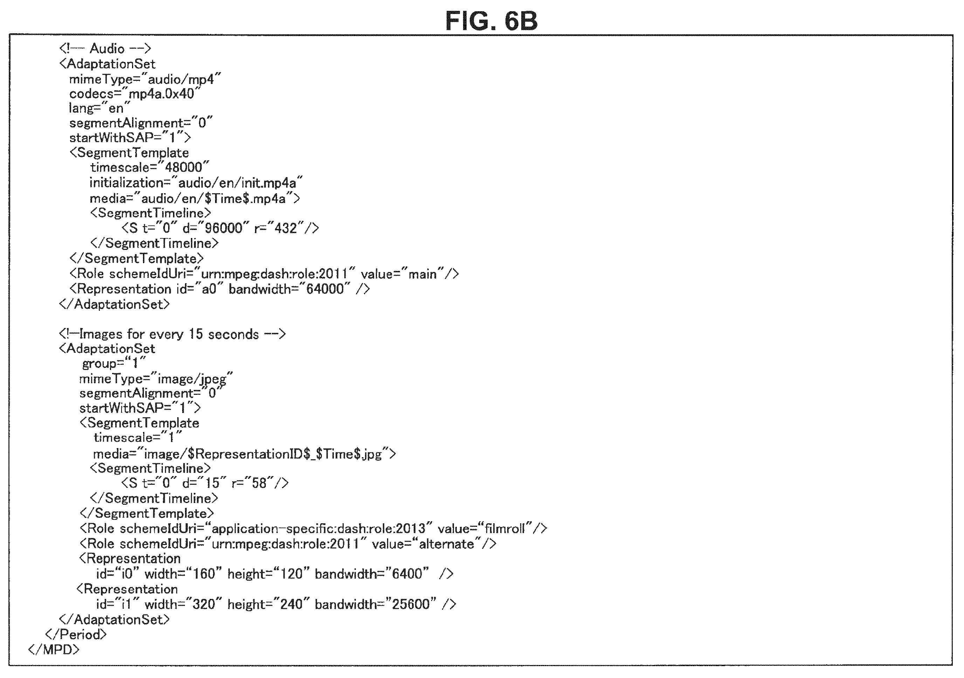

FIGS. 6A and 6B are descriptive diagrams showing the example of the MPD retained by the content server 10. A case in which alternative measures for the content reproduction device 20 are explicitly described in the MPD retained by the content server 10 is shown in FIGS. 6A and 6B. For the sake of convenience of description, two separate drawings are illustrated; however, the content shown in FIGS. 6A and 6B constitutes one MPD.

FIGS. 6A and 6B show elements "group" designated in tags <AdaptationSet>. "group='1"' is designated in the example shown in FIGS. 6A and 6B. The elements "group" define that one should be selected from videos set with the same value and reproduced, and the example of FIGS. 6A and 6B shows that the content reproduction device 20 is set to select either reproduction of a video (Video) or switched display of still images every 15 seconds (Images for every 15 seconds).

In addition, in the tags <AdaptationSet> each designated with the same group (group="1"), elements "Role" are designated. In addition, in the elements "Role," <Role schemeIdUri="urn:mpeg:dash:role:2011" value="main"/> or <Role schemeIdUri="urn:mpeg:dash:role:2011" value="alternate"/> is described. This means that reproduction of a video designated as "main" should be executed normal times, and when reproduction of a video is not possible, switched display of still images designated as "alternate" every 15 seconds should be executed.

As described above, it is possible to show in the MPD that, when groups having "Role='main'" or "Role='alternate'" are in the same "AdaptationSet," switching can be performed even in different types of media. Thus, by causing the content server 10 to retain the MPD shown in FIGS. 6A and 6B and to provide the MPD to the content reproduction device 20, the content reproduction device 20 can be set to execute reproduction of a video in normal times and to execute switched display of still images every 15 seconds when reproduction of a video is not possible.

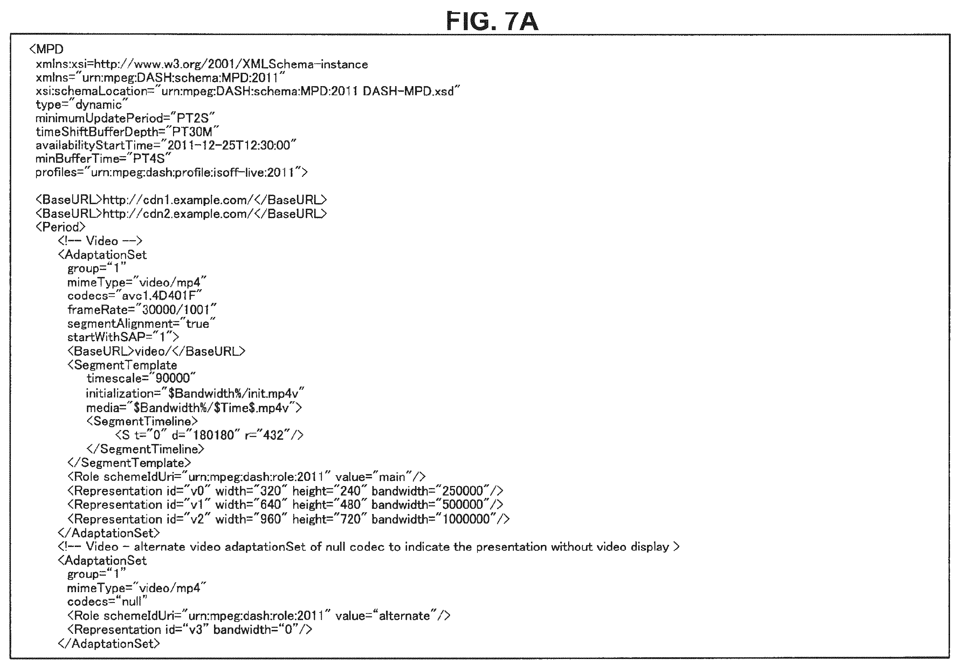

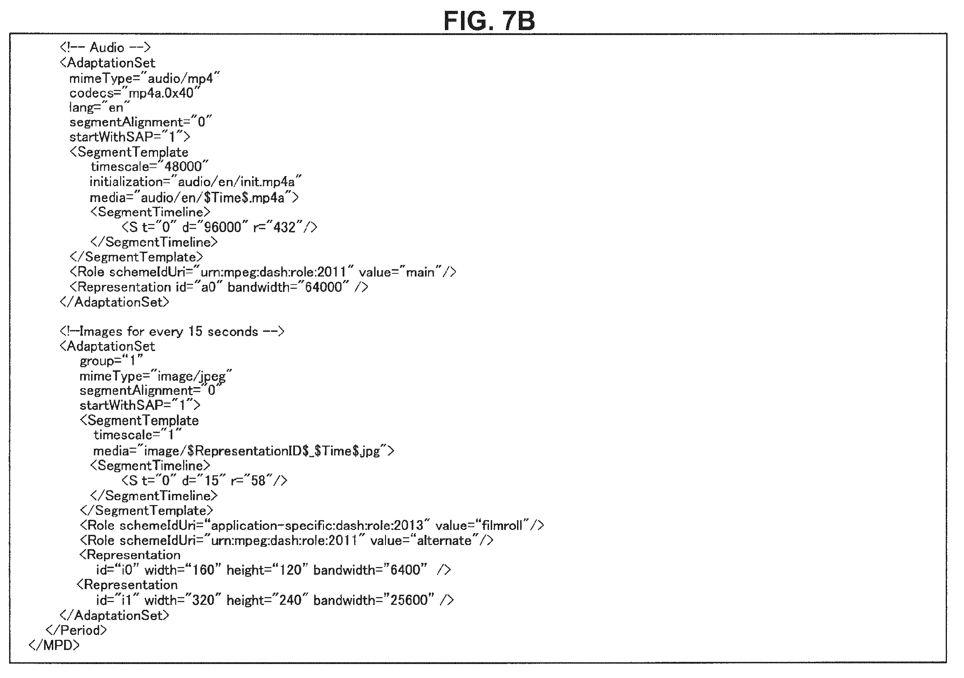

Another example will be introduced. FIGS. 7A and 7B are descriptive diagrams showing another example of an MPD retained by the content server 10. A case in which alternative measures for the content reproduction device 20 are explicitly described in the MPD retained by the content server 10 is shown in FIGS. 7A and 7B. For the sake of convenience of description, two separate drawings are illustrated; however, the content shown in FIGS. 7A and 7B constitutes one MPD.

In FIGS. 7A and 7B, the example of the MPD which defines switched display of still images every 15 seconds and reproduction of only sound of content as alternative measures to be taken when the content reproduction device 20 is not capable of reproducing the content is shown.

FIG. 7A shows the MPD in which "codecs='null"' is designated in the tag <AdaptationSet> designated as "group='1.'" By designating "codecs='null"' in the MPD like this, it is possible to set the content reproduction device 20 to reproduce only sound of content as an alternative measure to be taken when the content reproduction device 20 is not capable of reproducing the content.

Note that, when "codecs='null"' is designated as in FIG. 7A, "bandwidth" may be set to 0 as shown in FIG. 7A, or "bandwidth" may not be set.

By describing information of alternative measures to be taken when the content reproduction device 20 is not capable of reproducing content in the MPD retained by the content server 10, operations of the content reproduction device 20 can be coordinated. When there are a plurality of alternative measures as shown in FIGS. 7A and 7B, however, which alternative measure should be selected depends on what is installed in the content reproduction device 20.

Therefore, in the next example, an MPD which can cause operations of the content reproduction device 20 to be coordinated even when there are a plurality of alternative measures will be introduced.

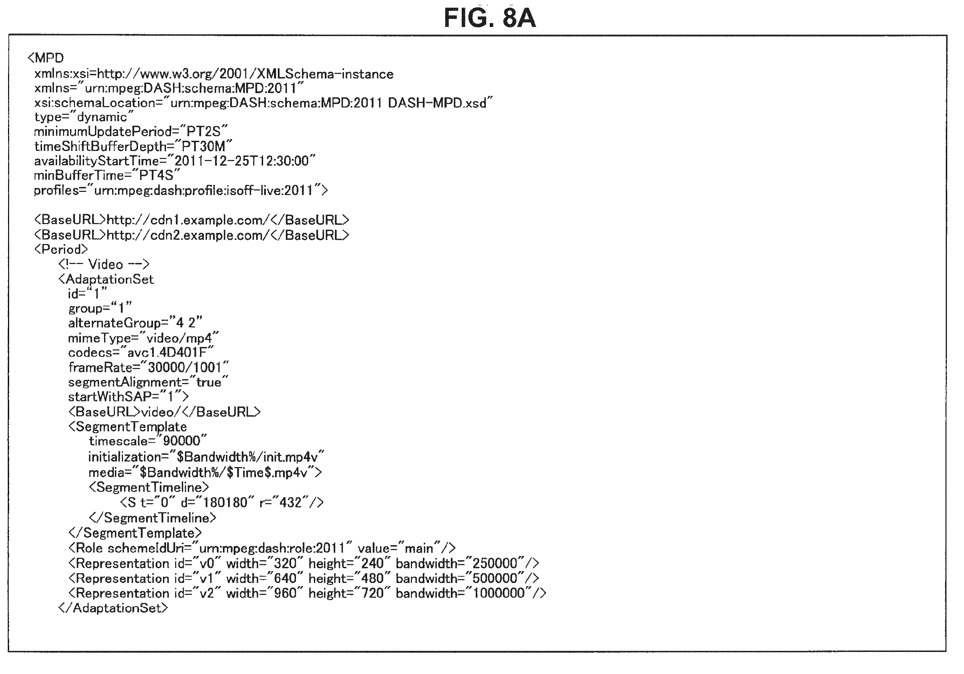

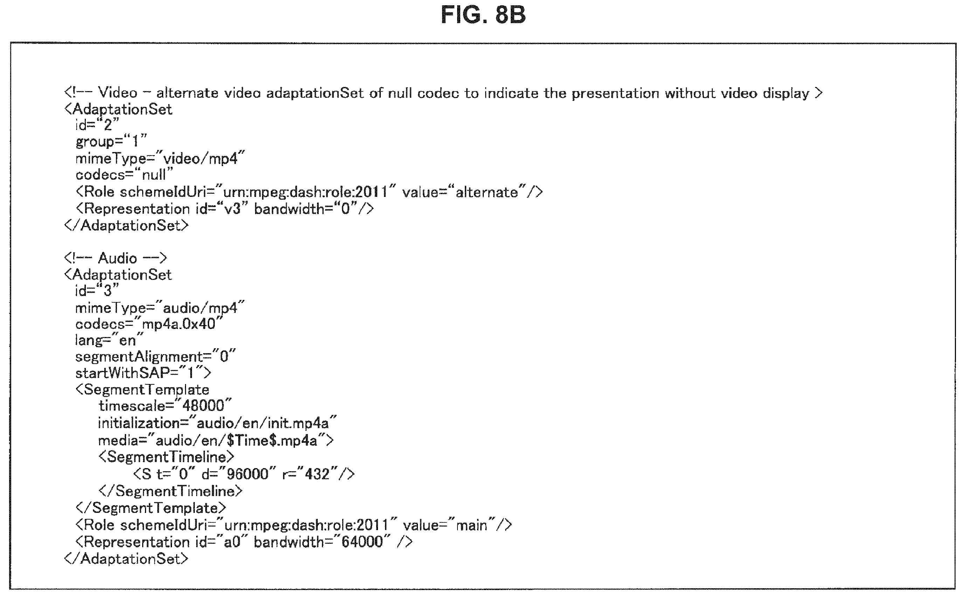

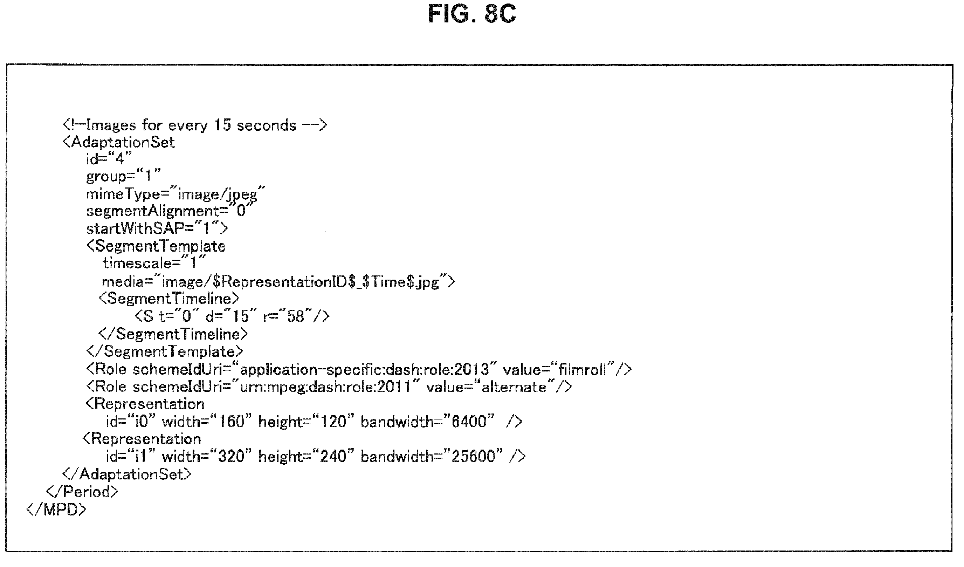

FIGS. 8A, 8B, and 8C are descriptive diagrams showing the example of the MPD retained by the content server 10. A case in which an alternative measure that should be prioritized when there are a plurality of alternative measures for the content reproduction device 20 is explicitly described in the MPD retained by the content server 10 is shown in FIGS. 8A, 8B, and 8C. For the sake of convenience of description, three separate drawings are illustrated; however, the content shown in FIGS. FIGS. 8A, 8B, and 8C constitutes one MPD.

In FIGS. 8A, 8B, and 8C, the example of the MPD which defines switched display of still images every 15 seconds and reproduction of only sound of content as alternative measures to be taken when the content reproduction device 20 is not capable of reproducing the content is shown.

Different ids designated in the tags <AdaptationSet> are shown in FIGS. 8A, 8B, and 8C. In the example shown in FIGS. 8A, 8B, and 8C, four reproduction media (video, reproduction of only sound of a video, reproduction of sound, and switched display of still images every 15 seconds) are prescribed in the MPD. In the example shown in FIGS. 8A, 8B, and 8C, id=1 is prescribed for video, id=2 for reproduction of only sound of a video, id=3 for reproduction of sound, and id=4 for switched display of still images every 15 seconds. In addition, "alternateGroup='4 2"' is designated in the tag <AdaptationSet> for the video that is the reproduction medium in normal times (see FIG. 8A). This means that, when the content reproduction device 20 is not capable of reproducing the video, switched display of still images every 15 seconds for which id=4 is designated is prioritized, and then reproduction of only sound of the video for which id=2 is designated is performed as an alternative measure for the content reproduction device 20.

As described above, by explicitly describing which alternative measure should be prioritized when there are a plurality of alternative measures for the content reproduction device 20 in the MPD retained by the content server 10, operations of the content reproduction device 20 can be set to be coordinated.

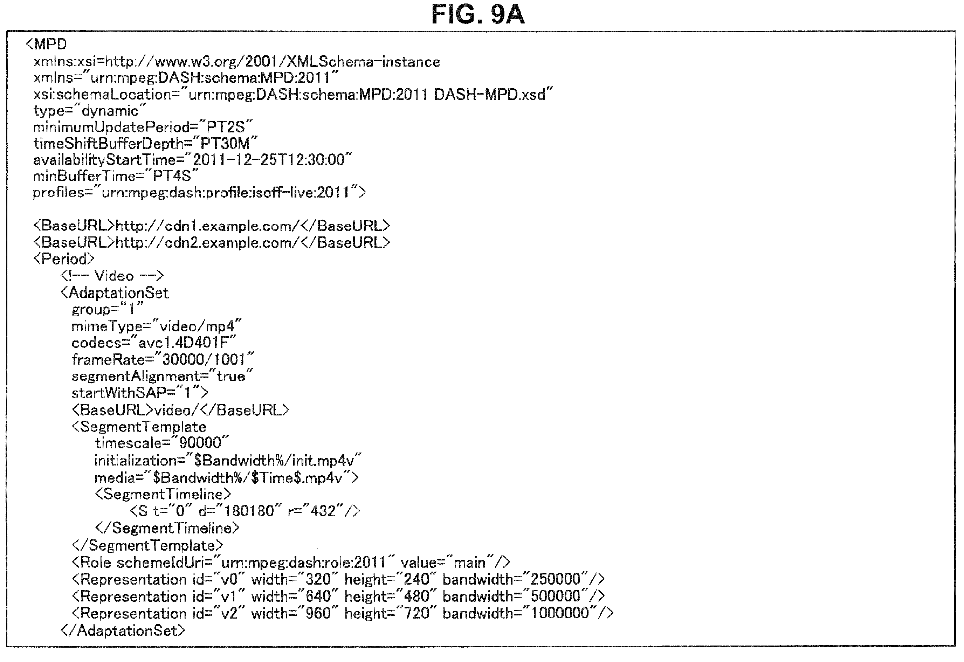

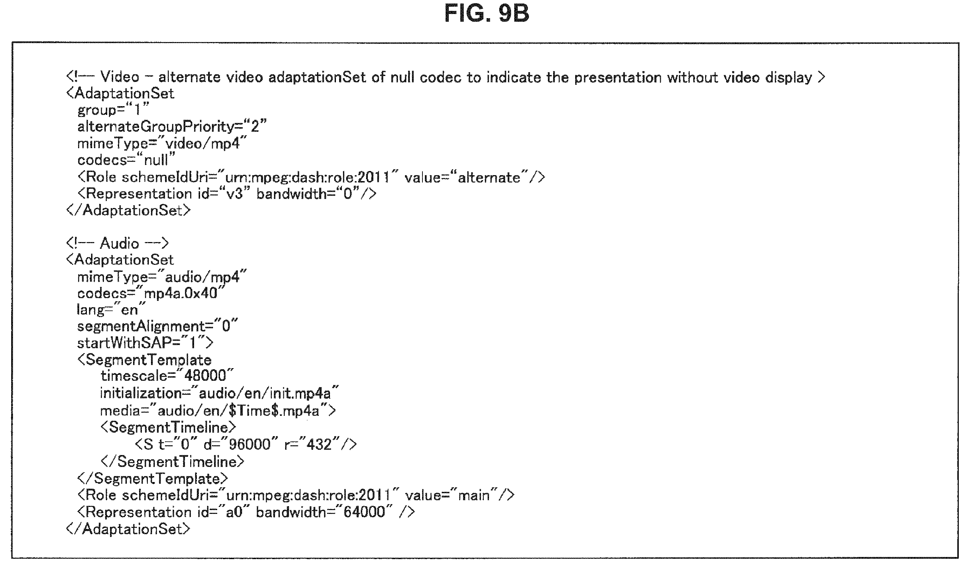

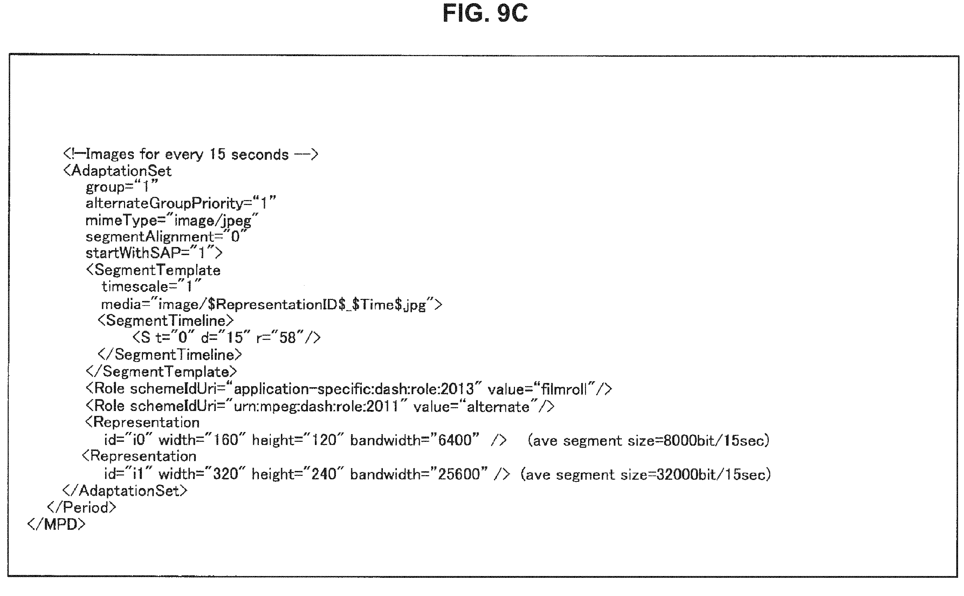

Another example of an MPD which can coordinate operations of the content reproduction device 20 even when there are a plurality of alternative measures will be shown. FIGS. 9A, 9B, and 9C are descriptive diagrams showing the example of the MPD retained by the content server 10. A case in which, when there are a plurality of alternative measures for the content reproduction device 20, which alternative measure should be prioritized is explicitly described in the MPD retained by the content server 10 is shown in FIGS. 9A, 9B, and 9C. For the sake of convenience of description, three separate drawings are illustrated; however, the content shown in FIGS. 6A and 6B constitutes one MPD.

In FIGS. 9A, 9B, and 9C, the example of the MPD which defines switched display of still images every 15 seconds and reproduction of only sound of content as alternative measures to be taken when the content reproduction device 20 is not capable of reproducing the content is shown.

In the MPD shown in FIGS. 9A, 9B, and 9C, attributes "alternateGroupPriority" in which the order of priority is set are shown in the tags <AdaptationSet> for which the same group is designated as the attribute "group" are shown. In these attributes "alternateGroupPriority," the order of priority when the content reproduction device 20 is not capable of reproducing the content is designated.

In the MPD shown in FIGS. 9A, 9B, and 9C, "alternateGroupPriority='1"' is designated in the tag <AdaptationSet> in which switched display of still images every 15 seconds is prescribed, and "alternateGroupPriority='2"' is designated in the tag <AdaptationSet> in which reproduction of only sound content is prescribed. This means that, when the content reproduction device 20 is not capable of reproducing the content, switched display of still images every 15 seconds should be prioritized in the content reproduction device 20.

By explicitly describing which alternative measure should be prioritized when there are a plurality of alternative measures when the content reproduction device 20 is not capable of reproducing the content in the MPD retained by the content server 10, operations of the content reproduction device 20 can be set to be coordinated.

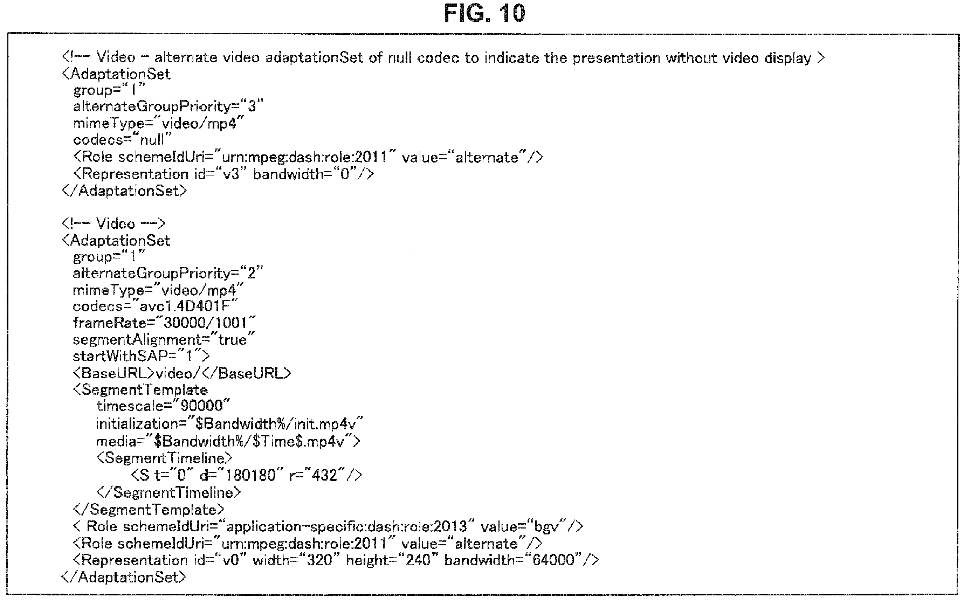

A modified example with respect to designation of the order of priority using the attribute "alternateGroupPriority" will be introduced. FIG. 10 is a descriptive diagram showing an example of an MPD. In FIG. 10, only a part of the MPD in which the order of priority is designated using the attribute "alternateGroupPriority" is extracted, and other parts thereof are assumed to be described as shown in FIGS. 9A, 9B, and 9C.

The example shown in FIG. 10 is of a case in which the order of priority is designated in the order of switched display of still images every 15 seconds, display of images that move to music, and reproduction of only sound of content as alternative measures to be taken when the content reproduction device 20 is not capable of reproducing the content. In addition, FIG. 10 shows the MPD with respect to display of images that move to music for which second priority is designated and reproduction of only sound of content for which third priority is designated.

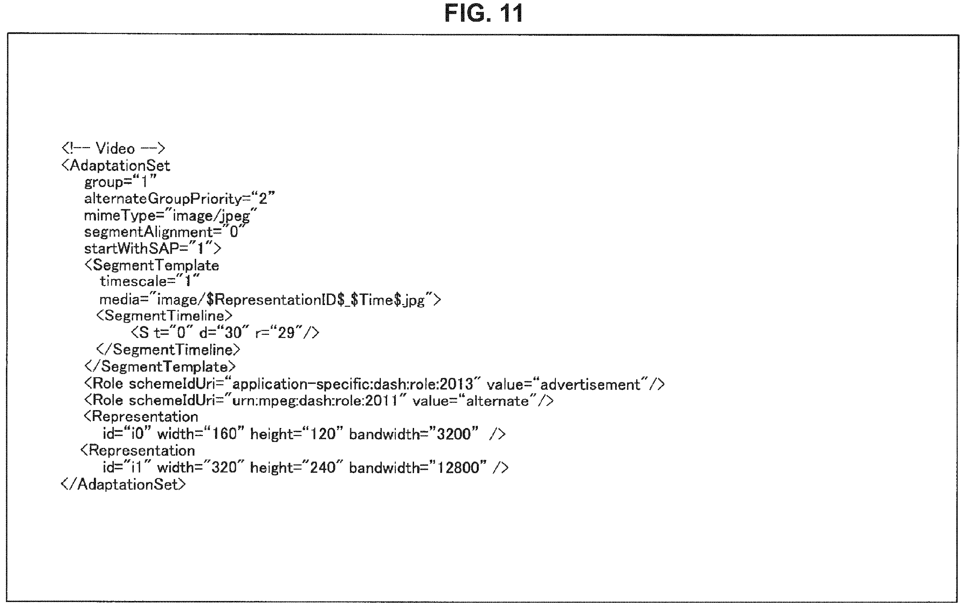

FIG. 11 is a descriptive diagram showing an example of an MPD. In FIG. 11, only a part of the MPD in which the order of priority is designated using the attribute "alternateGroupPriority" is extracted and other parts thereof are assumed to be described as shown in FIGS. 9A, 9B, and 9C.

The example shown in FIG. 11 is of a case in which the order of priority is designated in the order of switched display of still images every 15 seconds, display of an advertisement, and reproduction of only sound of content as alternative measures to be taken when the content reproduction device 20 is not capable of reproducing the content. In addition, FIG. 10 shows the MPD with respect to display of an advertisement for which second priority is designated and reproduction of only sound of content for which third priority is designated.

In this manner, even though alternative measures are changed when the content reproduction device 20 is not capable of reproducing the content, the order of priority can be flexibly set using the attribute "alternateGroupPriority" and operations of the content reproduction device 20 can be coordinated.

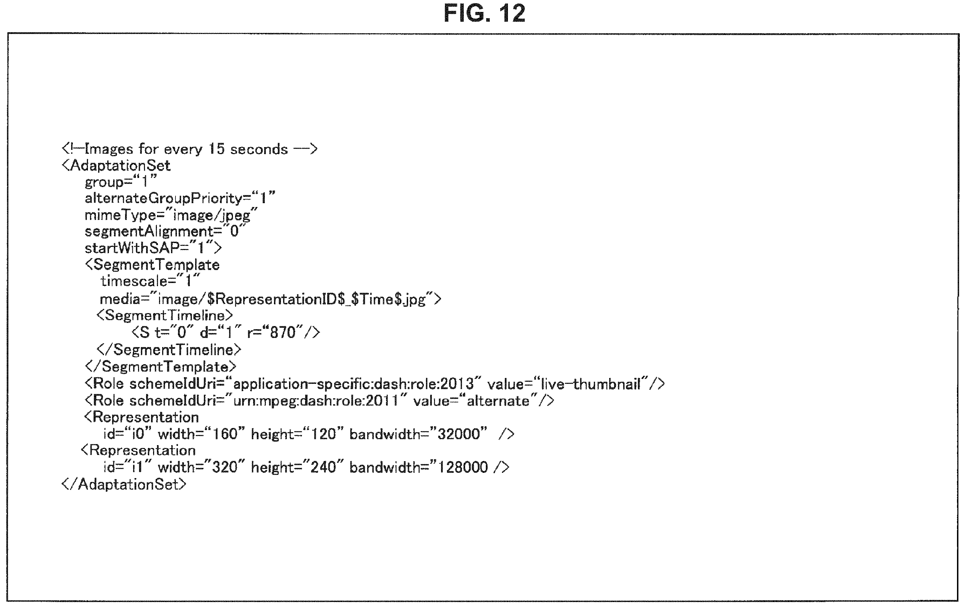

FIG. 12 is a descriptive diagram showing another example of an MPD. In FIG. 12, only a part of the MPD in which the order of priority is designated using the attribute "alternateGroupPriority" is extracted and other parts thereof are assumed to be described as shown in FIGS. 9A, 9B, and 9C.

During real-time distribution of a video, for example, at least a temporal length of segments distributed first is delayed. In order to make up for this delay, the content server 10 distributes JPEG files with a fixed interval to the content reproduction device 20, separate from the video. The content reproduction device 20 starts reproduction prior to the JPEG files or prior to the JPEG files and sound, then the content server 10 performs real-time distribution of the video, and after acquiring the video, the content reproduction device 20 switches to the video for reproduction. Accordingly, the delay of the content reproduction device 20 can be shortened.

FIG. 12 shows the example of description of the MPD for causing JPEG files with a fixed interval to be preferentially reproduced by the content reproduction device 20 when the content reproduction device 20 is not capable of reproducing content such as when a video has not arrived.

### <5. Conclusion>

According to an embodiment of the present disclosure described above, by describing information of an alternative measure to be taken when the content reproduction device 20 is not capable of reproducing content in an MPD retained by the content server 10, operations of the content reproduction device 20 can be coordinated. In addition, even when there are a plurality of alternative measures, operations of the content reproduction device 20 can be coordinated by describing information of the order of priority in the MPD retained by the content server 10.

It is also possible to generate a computer program for exerting the functions equivalent to the above-described elements of the content server 10 and the content reproduction device 20 on hardware such as a central processing unit (CPU), a ROM, and a random-access memory (RAM) provided in the content server 10 and the content reproduction device 20. Moreover, a storage medium that stores the computer program is also provided.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.
(1) A server device including:
   a storage unit configured to store information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
   a communication unit configured to transmit the access information to the client device according to a request from the client device which reproduces the content.
(2) The server device according to (1), wherein the storage unit stores information of order of priority of the alternative content by describing the information in the access information.
(3) A content providing method including:
   storing information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
   transmitting the access information to the client device according to a request from the client device which reproduces the content.
(4) A computer program causing a computer to execute:
   storing information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
   transmitting the access information to the client device according to a request from the client device which reproduces the content.

### Reference Signs List

- 10: content server
- 12: network
- 20: content reproduction device
- 120: file generation unit
- 122: encoder
- 130: storage unit
- 140: communication unit
- 220: communication unit
- 230: storage unit
- 240: reproduction unit
- 250: selection unit

## Claims

1. A server device comprising:
a storage unit configured to store information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
a communication unit configured to transmit the access information to the client device according to a request from the client device which reproduces the content.

2. The server device according to claim 1, wherein the storage unit stores information of order of priority of the alternative content by describing the information in the access information.

3. A content providing method comprising:
storing information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
transmitting the access information to the client device according to a request from the client device which reproduces the content.

4. A computer program causing a computer to execute:
storing information of alternative content by describing the information in access information for accessing each of a plurality of sub segments constituting each piece of encoded data which is obtained by encoding same content at a different bit rate, the alternative content being reproduced in a client device when the client device is not capable of reproducing the same content; and
transmitting the access information to the client device according to a request from the client device which reproduces the content.
